# EUROPÄISCHE PATENTSCHRIFT

(11) **EP 3 362 756 B1**
(45) Veröffentlichungstag und Bekanntmachung des Hinweises auf die Patenterteilung: **11.12.2019**
(21) Anmeldenummer: 16774959.7
(22) Anmeldetag: 04.10.2016
(51) Int. Cl.: F27B 7/28, F27D 1/00, F27D 1/10

(54) **WÄRMEDURCHLÄSSIGES ROHR BEINHALTEND FASERVERBUNDKERAMIK**
FIBRE COMPOSITE CERAMICS CONTAINING HEAT PERMEABLE PIPE
TUBE DIATHERMANE COMPRENANT DE LA CERAMIQUE COMPOSITE RENFORCÉE DE FIBRES

(30) Priorität: 14.10.2015 EP 15189756
(43) Veröffentlichungstag der Anmeldung: 22.08.2018
(73) Patentinhaber: BASF SE, 67056 Ludwigshafen am Rhein (DE)
(72) Erfinder: KALO, Benedikt, 68163 Mannheim (DE)
(74) Vertreter: BASF IP Association
(86) Internationale Anmeldenummer: PCT/EP2016/073614
(87) Internationale Veröffentlichungsnummer: WO 2017/063911

(56) Entgegenhaltungen:
- WO-A1-2014/067706
- CN-U- 203 927 100
- CN-Y- 201 242 344
- DE-A1-102006 038 713
- US-A- 4 932 863
- US-A- 5 261 943
- US-A1- 2012 003 128

## Beschreibung

Die vorliegende Erfindung betrifft ein Rohr, das doppelwandig aufgebaut ist, wobei das Material der innenliegenden Wand Faserverbundkeramik beinhaltet und das Material der außenliegenden Wand Metall beinhaltet, wobei die doppelwandige Rohrwand einen Quotient aus Wärmeleitfähigkeit und Wanddicke (Wärmedurchgangskoeffizient) bei 800 °C von > 50 W/(m²·K) aufweist. Ferner betrifft die vorliegende Erfindung den Einsatz dieses Rohres in einem Drehrohrofen und die Verwendung des Drehrohrofens zur thermischen Behandlung von Materialien. Des Weiteren betrifft die Erfindung die Verwendung eines einwandigen oder mindestens doppelwandigen Rohres beinhaltend Faserverbundkeramik als Drehrohr.

Die steigenden Anforderungen an Reinheit und Homogenität von Ausgangsmaterialien beispielsweise für den Einsatz im elektronischen und medizinischen Bereich stellen eine hohe Herausforderung für die Herstellung dieser Materialien dar.

In vielen Herstellmethoden ist eine Stufe des Prozesses die thermische Behandlung der Materialien bei Temperaturen von größer als 500°C. Die thermische Behandlung von diesen Materialien wird bei vielen Prozessen wie z.B. bei der Herstellung von Zement, Klinker, aber auch Düngemittel, Pigmente und Katalysatoren, in kostengünstigen Drehrohröfen durchgeführt. Prinzipiell werden zwei Arten von Drehrohröfen unterschieden: direkt beheizte Drehrohröfen und indirekt beheizte Drehrohröfen. Unter direkt beheizten Drehrohröfen werden Öfen verstanden, bei denen die Wärme im Ofenrohr erzeugt wird oder dem Ofenrohrinneren heißes Rauchgas direkt zugeführt wird. Dabei kann z.B. eine Brennerflamme am Fußende des Drehrohrofens zum Einsatz kommen, so dass Wärmeübertragung durch Strahlung und Konvektion je nach Rohrabschnitt dominierend sind. Direkt beheizte Drehrohröfen sind in der Regel zur thermischen Isolation an der Rohrinnenwand ausgemauert. Die Ausmauerung ist üblicherweise einige Zentimeter stark (10-50 cm). Der Rohrmantel besteht üblicherweise aus Stahl. Direkt beheizte Drehrohröfen kommen jedoch nur bei solchen Reaktionen in Betracht, bei denen die Rauchgase inert zu den im Drehrohrofen durchzuführenden Reaktionen sind oder bei denen die Reaktion von Rauchgaskomponenten mit dem Aufgabegut keinen negativen Einfluss auf die Produkteigenschaften hat.

Bei indirekt beheizten Drehrohröfen wird die Wärme durch die Rohrwand eingebracht. Die Beheizung kann z.B. elektrisch, durch Erdgasbrenner, oder Dampf erfolgen. Das Rohr besteht in den meisten Anwendungsfällen aus einem hitzebeständigen Stahl oder einer entsprechenden Nichteisenlegierung, z.B. einer Nickelbasislegierung. In speziellen Anwendung, z.B. bei Temperaturen > 1200 °C oder stark korrosivem Aufgabegut, kommen keramische Rohre zum Einsatz.

Häufig werden indirekt beheizte Drehrohröfen verwendet, welche mit Einrichtungen wie Hubschaufeln oder andersförmigen Einbauten im Rohrinnenraum versehen sind, die im Wesentlichen parallel zur Drehachse angeordnet sind. Dadurch wird eine optimale Durchmischung des Gemisches gefördert, Reaktionen des Gemisches mit der Gasphase erleichtert und der Bildung von Agglomeraten entgegengewirkt.

Für einige Anwendungen werden metallische Rohre mit weiteren Materialen umhüllt, z.B. mit Faserverbundkeramiken oder keramische Fasern. Dies dient der thermischen Isolierung bei Prozessen, bei denen die Wärme dem Rohr stirnseitig zugeführt wird oder unmittelbar im Rohr erzeugt wird. DE 102006038713 und DE 102012219870 offenbaren einen druckfesten Körper bestehend aus einem Grundkörper aus Stahl und zumindest einer den Grundkörper außenseitig umschließenden Schicht aus keramischem Faserverbundwerkstoff. In diesen Beispielen wirkt die Faserverbundschicht isolierend und ein Wärmefluss von außen nach innen, d.h. eine indirekte Beheizung, ist nicht möglich. Es findet sich kein Hinweis auf einen Mehrschichtaufbau mit einem keramischen Innenrohr oder einem Innenrohr aus Faserverbundkeramik. CN203927100 offenbart ein metallisches Rohr ummantelt mit keramischen Fasern. Bei diesen keramischen Fasern handelt es sich nicht um einen Verbund aus keramischer Matrix, in die keramische Fasern eingebettet sind. US 4,932,863 offenbart ebenso einen wärmeleitfähigen, meist metallischen, Grundkörper, der mit isolierenden keramischen Fasern ummantelt ist.

Ein Verbundwerkstoff wird auch in US 2015/078505 beschrieben; dort wird ein gasdichtes, zweischichtiges Verbundrohr aus Siliciumcarbid zur Endlagerung von nuklearen Kernbrennstoffen beinhaltend eine dichte monolithische SiC-Schicht und eine poröse SiC-SiC-Faserverbundkeramikschicht. Eine Verwendung als indirekt beheiztes Rohr wird nicht offenbart.

Ferner werden für Reaktionen, deren Reaktionsmischungen stark zu An- und/oder Verbackungen neigen, Drehrohröfen vorzugsweise mit Klopfern ausgestattet, um Anbackungen an der Rohrinnenwand zu vermeiden. Bei Anbackungen besteht die Gefahr, dass sich das angebackene Material nicht mehr mit dem anderen pulverförmigen Material mischt und somit das Produkt inhomogen und unbrauchbar ist. Ferner kann das Rohr derart verstopfen, dass sich im kontinuierlichen Betrieb das nachfließende Material am Kopf (Eingang) staut und überläuft.

Es wurde kürzlich festgestellt, dass es bei der thermischen Behandlung von korrosiven Feststoffen in Drehrohröfen mit Rohren aus Metalllegierungen zum Angriff des Werkstoffs und damit zu Verunreinigung des Produkts sowie Verschleiß des Rohrs kommen kann (WO 2016/083185). Bei hohen Temperaturen ist eine Erweichung der Legierungsoberfläche und damit Materialabtrag und Produktverunreinigung auch bei Feststoffen ohne korrosive Eigenschaften möglich.

Daher können manche Stoffe aufgrund ihrer Korrosivität nicht in metallischen Rohren thermisch behandelt werden, z.B. weil Verunreinigungen durch Rohrbestandteile im Produkt nicht akzeptabel sind. Typische Verunreinigungen sind Ni und Cr (siehe Praxishandbuch Thermoprozesstechnik, Band II: Anlagen, Komponenten, Sicherheit. 2. Auflage, 2011, S. 575, Abschnitt "Metallische Rohre"). Oft kommen direkt beheizte, ausgemauerte Drehrohröfen ebenfalls nicht infrage, z.B. aufgrund der geringeren Präzision der Temperaturkontrolle oder der durch das Rauchgas bedingten nicht frei wählbaren Atmosphäre im Rohr. Indirekt beheizte Drehrohröfen mit Rohren aus konventioneller Keramik weisen neben den o.g. Problemen zusätzlich das Problem auf, dass keine Klopfer eingesetzt werden können, da monolithische Keramiken keine hinreichende mechanische Schockstabilität aufweisen und somit der Einsatz von Klopfern zum Bruch führen würde.

Für Stoffe, für deren thermische Behandlung ein metallenes Rohr und ein direkt beheizter Drehrohrofen nicht angewandt werden können, muss auf einen indirekt beheizten Drehrohrofen mit keramischem Rohr zurückgegriffen werden. Wird zudem der Einsatz von Klopfern benötigt oder ist mit den in ihren Dimensionen beschränkten keramischen Rohren der angestrebte Feststoffdurchsatz nicht (wirtschaftlich) erreichbar, ist die Drehrohrofentechnologie bisher für die thermische Behandlung des Stoffs nicht geeignet. In diesem Fall muss dann auf eine andere, kostspieligere Ofentechnologie zurückgegriffen werden.

Eine solche alternative Ofentechnologie ist beispielsweise das Durchlaufofen- (Tunnelofen-) Verfahren, z.B. unter Verwendung von Rollenherdöfen, Pusheröfen oder Bandöfen. In diesem Verfahren wird das Material in einer Brennkapsel eingebracht und dann durch eine Heizzone bewegt. Dieses Verfahren minimiert bei der Verwendung von keramischen Brennkapseln die Korrosionsprobleme. Jedoch haben Rollenöfen den Nachteil, dass die Größe der Brennkästen begrenzt ist und dass diese beim Aufheizvorgang Wärme aufnehmen, die nicht rückgewonnen werden kann. Der Einsatz keramischer Brennhilfsmittel limitiert zudem die Aufheiz- und Abkühlgeschwindigkeiten auf in der Regel 1-3 K/min, da keramische Brennhilfsmittel nicht thermoschockbeständig sind. Dies bedingt einen hohen Energieverbrauch und lange Zykluszeiten durch das Aufheizen und Abkühlen. Da bei Schüttgütern, manchmal noch durch auftretende Sinterkrusten verstärkt, die Diffusion des Reaktionsgases stark behindert wird, ist die Schütthöhe auf wenige Zentimeter beschränkt und die Haltezeit sehr lang. Der Vorteil von Rollenherdöfen sind deren Unempfindlichkeit gegenüber Staubbildung und Klebrigkeit bzw. Erweichung des Kalzinationsguts. Ferner sind Rollenherdöfen sehr flexibel einsetzbar und erlauben häufige Produktwechsel, da eine Querkontamination ausgeschlossen ist und keine An- und Abfahrverluste entstehen.

Ein Beispiel dieser Ausgangmaterialien mit hohen Reinheitsanforderungen (electronic grade) sind Phosphorprodukte für LEDs, die einen Kalzinierprozess bei ca. 1600°C durchlaufen. Derzeit wird die Kalzinierung in einem Durchlaufofen (Tunnelofen) durchgeführt.

Ein anderes Beispiel von Ausgangmaterialien mit hohen Reinheitsanforderungen sind lithiumhaltige Übergangsmetalloxide und Lithium-Eisen-Phosphate, die als Elektrodenmaterialien für Lithium-Batterien eingesetzt werden.

Die meisten dieser Forschungsaktivitäten beziehen sich auf die Materialien als solche (siehe z.B. US 8,992,794 B2, US 8,377,412 B2, US 8,980,475 B2, WO14180686 A1 oder EP 2 351 139 B1). Jedoch sind der Einfluss der Schritte der thermischen Behandlung für die Eigenschaften des jeweiligen Elektrodenmaterials und die Kosten des Herstellungsprozesses nicht zu unterschätzen.

In WO 2012/177833 wird die thermische Behandlung eines Oxid-Kathode-Materials in einer Kaskade von zwei Öfen mit unterschiedlichen Temperaturen beschrieben, wobei der erste bevorzugt ein metallischer Drehrohrofen und der zweite ein Drehrohrofen oder ein Rollenherdofen ist. Das Problem einer möglichen Korrosion, vor allem in einem ggf. zweiten Drehrohrofen bei Temperaturen von über 900°C, bleibt jedoch ungelöst.

In EP 2 696 406 A wird ebenso eine zweistufige thermische Behandlung beschrieben, wobei vor der Behandlung in einem Behälter (Brennkapsel) eine Behandlung in einem Drehrohrofen vorgeschaltet ist. Als Materialien des Drehrohrofens werden solche vorgeschlagen, die exzellent die Wärme leiten wie z.B. Nickel, Titan oder Edelstahl oder auch Keramik. Als Temperaturen werden 700 bis 1100°C angegeben. In dem in EP 2 696 406 A offenbarten Beispiel wird ein doppelwandiger Drehrohrofen verwendet, dessen Wände die Wärme exzellent leiten. Auch in dieser Offenbarung wird das Problem einer möglichen Korrosion nicht thematisiert.

Demnach ist bislang die kostengünstige Drehrohrofentechnologie für die thermische Behandlung von Stoffen mit einer sehr hohen Reinheitsanforderung und korrosiven Eigenschaften nicht geeignet. Es muss für diese Materialien auf andere Ofentechnologien zurückgegriffen werden. Großtechnisch werden beispielsweise diese Elektrodenmaterialien für Lithium-Ionen-Batterien derzeit in Rollenherdöfen hergestellt.

Die Aufgabe der vorliegenden Erfindung ist demnach die Hochtemperatur-Behandlung bei Temperaturen von 500°C bis 1600°C von Materialien, insbesondere von korrosiven Materialien, wie z.B. alkalischen Kathodenmaterialien für Lithium-Ionen-Batterien, wobei hohe Produkt-Reinheit gefordert wird, vorteilhaft zu gestalten. Ferner ist wegen der Kohäsivität einiger Materialien bei hohen Temperaturen die Anwendung von Klopfern notwendig, die einen Einsatz von herkömmlichen keramischen Werkstoffen ausschließt. Metallische Werkstoffe können, je nach Werkstoff, bereits ab Umgebungstemperatur zu nicht zu vernachlässigender Kontamination des Produkts mit Legierungselementen, insbesondere Chrom, führen. Bei hohen Temperaturen ist ferner eine Erweichung der Legierungsoberfläche und damit Materialabtrag und Produktverunreinigung auch bei Feststoffen ohne korrosive Eigenschaften möglich.

Der vorliegenden Erfindung lag demnach die Aufgabe zugrunde, ein Reaktorsystem zur Verfügung zu stellen, das bei Temperaturen von größer als 500 °C geeignet ist, Materialien, die korrosiv sind in Bezug auf den gewählten Werkstoff, Atmosphäre und den thermodynamischen Parametern und/oder zu An- und Verbackungen neigen, in hoher Reinheit, z.B. Verunreinigungen im Bereich < 10 ppm, und hoher Homogenität, z.B. Schwankung in der Kristallitgröße von < 20 %, mit Hilfe einer indirekten Beheizung thermisch zu behandeln.

Überraschenderweise wurde gefunden, dass ein wärmedurchlässiges Rohr für die thermische Behandlung von korrosiven und/oder zu An- und/oder Verbackungen neigenden Materialien, geeignet ist, die gestellte Aufgabe zu lösen, wobei das Rohr doppelwandig aufgebaut ist, und wobei das Material der innenliegenden Wand Faserverbundkeramik beinhaltet und das Material der außenliegenden Wand Metall beinhaltet, wobei die doppelwandige Rohrwand einen Quotient aus Wärmeleitfähigkeit und Wanddicke (Wärmedurchgangskoeffizient) bei 800 °C von > 50 W/(m2·K) aufweist.

Ferner beinhaltet die vorliegende Erfindung die Verwendung von Faserverbundkeramikwerkstoffen als Rohrmaterial in indirekt beheizten Drehrohröfen, ggf. auch als einwandiges Rohr, bevorzugt als doppelwandiges Rohr.

Ferner beinhaltet die vorliegende Erfindung ein Drehrohr, das mindestens doppelwandig aufgebaut ist, wobei das Material von mindestens einer Wand eine Faserverbundkeramik beinhaltet und das Material mindestens einer anderen Wand Metall beinhaltet.

Durch die vorliegende Erfindung kann die Kontamination des thermisch zu behandelnden Produkts mit Legierungsbestandteilen von Metallrohren vorteilhaft komplett vermieden werden, d.h. im Rahmen der Messgenauigkeit mindestens kleiner 10 ppm. Ferner ermöglicht die vorliegende Erfindung die Anwendung von Klopfern zur Vermeidung von Produktanbackungen am Rohr. Bislang wurden Faserverbundkeramiken in Rohren ausschließlich als äußere Isolationsschicht verwendet, z.B. US 6,733,907.

Die doppelwandige erfindungsgemäße Rohrwand, kurz auch "erfindungsgemäße Rohrwand" genannt, weist einen Quotient aus Wärmeleitfähigkeit und Wanddicke (Wärmedurchgangskoeffizient) bei 800 °C von > 20 W/(m²·K), bevorzugt > 30 W/(m²*K), weiter bevorzugt > 50 W/(m²*K), weiter bevorzugt > 100 W/(m²*K), weiter bevorzugt > 200 W/(m²*K), weiter bevorzugt > 300 W/(m²*K), weiter bevorzugt > 500 W/(m²*K), insbesondere > 1000 W/(m²*K), auf. Dies gilt auch für das erfindungsgemäße Rohr und das erfindungsgemäße Drehrohr. Die obere Grenze des Quotienten aus Wärmeleitfähigkeit und Wanddicke (Wärmedurchgangskoeffizient) liegt derzeit - technisch bedingt - bei ca. 5000 W/(m²*K). Die Vorgehensweise zur Bestimmung des Wärmedurchgangskoeffizienten ist dem Fachmann bekannt (Kapitel Cb: Wärmedurchgang, VDI-Wärmeatlas, 8. Auflage, 1997). Entsprechende Rohre werden im Zusammenhang mit der vorliegenden Erfindung auch "erfindungsgemäße Rohre" genannt.

Erfindungsgemäße Rohre sind vorteilhaft in radialer Richtung gasdicht. Unter dem Begriff "gasdicht" wird ein Festkörper verstanden, der gemäß DIN EN 623-2 eine offene Porosität von Null besitzt. Die zulässige Messungenauigkeit liegt bei < 0,3 %.

Das erfindungsgemäße Rohr kann alle dem Fachmann bekannten Geometrien aufweisen, z.B. zylindrisch oder konisch. Der Querschnitt kann prismatisch, kreisförmig oder oval sein. Verjüngungen und Einschnürungen sind möglich, z.B. ein- und/oder auslaufseitig.

Die Faserverbundkeramiken sind charakterisiert durch eine Matrix aus keramischen Partikeln zwischen die keramische Fasern, insbesondere Langfasern, als Wickelkörper oder als Textil eingebettet sind. Es wird von faserverstärkter Keramik, Verbundkeramik oder auch einfach Faserkeramik gesprochen. Matrix und Faser können dabei im Prinzip unabhängig voneinander aus allen bekannten keramischen Werkstoffen bestehen, wobei in diesem Zusammenhang auch Kohlenstoff als keramischer Werkstoff behandelt wird.

Bevorzugte Oxide der Fasern und/oder der Matrix sind Oxide eines Elementes aus der Gruppe: Be, Mg, Ca, Sr, Ba, Seltene Erden, Ti, Zr, Hf, V, Nb, Ta, Cr, Mo, W, Mn, Fe, Co, Ni, Zn, B, Al, Ga, Si, Ge, Sn, Re, Ru, Os, Ir, In, sowie Mischungen dieser Oxide.

Mischungen sind sowohl als Material für die Faser als auch für die Matrix vorteilhaft geeignet. Faser und Matrix müssen generell nicht aus demselben Material sein.

Grundsätzlich sind nicht nur binäre, sondern auch ternäre und höhere Mischungen geeignet und von Bedeutung. In einer Mischung können die einzelnen Bestandteile in gleicher molarer Menge vorkommen, vorteilhaft sind aber Mischungen mit stark unterschiedlicher Konzentration der einzelnen Bestandteile der Mischung, bis hin zu Dotierungen, bei denen eine Komponente in Konzentrationen von < 1 % vorkommt.

Besonders vorteilhaft sind folgende Mischungen: Binäre und ternäre Mischungen aus Aluminiumoxid, Zirkoniumdioxid und Yttriumoxid (z.B. Zirkoniumdioxid-verstärktes Aluminiumoxid); Mischungen aus Siliziumcarbid und Aluminiumoxid; Mischungen aus Aluminiumoxid und Magnesiumoxid (MgO-Spinell); Mischungen aus Aluminiumoxid und Siliziumdioxid (Mullit); Mischung aus Aluminium- und Magnesiumsilikate, Ternäre Mischung aus Aluminiumoxid, Siliziumoxid und Magnesiumoxid (Cordierit); Steatit (Magnesiumsilikat); Zirkoniumdioxid-verstärktes Aluminiumoxid; Stabilisiertes Zirkoniumdioxid ZrO₂: Stabilisatoren in Form von Magnesiumoxid (MgO), Calciumoxid (CaO) oder Yttriumoxid (Y₂O₃), gegebenenfalls kommen auch Ceroxid (CeO₂), Scandiumoxid (ScO₃) oder Ytterbiumoxid (YbO₃) als Stabilisatoren zum Einsatz; ferner Aluminiumtitanat (stöchiometrische Mischung von Aluminiumoxid und Titanoxid); Siliziumnitrid und Aluminiumoxid (Siliziumaluminiumoxinitride SIALON).

Als zirkoniumdioxidverstärktes Aluminiumoxid wird vorteilhaft Al₂O₃ mit 10 bis 20 Mol-% ZrO₂ eingesetzt. Zur Stabilisierung von ZrO₂ kann vorteilhaft 10 bis 20 Mol-% CaO, bevorzugt 16 Mol-%, 10 bis 20 Mol-% MgO, bevorzugt 16, oder 5 bis 10 Mol-% Y₂O₃, bevorzugt 8 Mol-% ("vollstabilisiertes Zirkoniumdioxid") oder 1 bis 5 Mol-% Y₂O₃, bevorzugt 4 Mol-% ("teilstabilisiertes Zirkoniumdioxid") verwendet werden. Als ternäre Mischung sind z.B. 80% Al₂O₃, 18,4% ZrO₂ und 1,6% Y₂O₃ vorteilhaft.

In anderen Ausführungsformen der vorliegenden Erfindung wählt man Fasern aus Basalt, Bornitrid, Wolframcarbid, Aluminiumnitrid, Titandioxid, Bariumtitanat, Bleizirkonattitanat und/oder Borcarbid.

Als Fasern kommen vorteilhaft Verstärkungsfasern in Frage, die in die Klassen oxidische, carbidische, nitridische Fasern bzw. C-Fasern und SiBCN-Fasern fallen. Bevorzugt sind Fasern des keramischen Verbundwerkstoffes gewählt aus Aluminiumoxid-, Mullit-, Siliziumcarbid-, Zirkoniumdioxid- und/oder Kohlenstoff-Fasern. Mullit besteht dabei aus Mischkristallen aus Aluminiumoxid und Siliziumdioxid. Bevorzugt ist die Verwendung von Fasern aus Oxidkeramik (Al₂O₃, SiO₂, Mullit) oder aus Nichtoxidkeramik (C, SiC). Bevorzugt sind oxidische Fasern.

Als Matrix kommen vorteilhaft oxidische und carbidische Keramiken in Frage, insbesondere Aluminiumoxid, Mullit, Siliziumcarbid, Zirkoniumdioxid und Spinell.

Es kommen vorteilhaft kriechbeständige Fasern zum Einsatz, d. h. Fasern, die im Kriechbereich - im Temperaturbereich bis 1400 °C - keine oder minimale zeitliche Zunahme der bleibenden Verformung, also der Kriechdehnung zeigen. Die Firma 3M gibt für die NEXTEL-Fasern folgende Grenztemperaturen an für die bleibende Dehnung von 1 % nach 1000 h unter Zugbelastung von 70 MPa an: NEXTEL 440: 875 °C, NEXTEL 550 und NEXTEL 610: 1010 °C, NEXTEL 720: 1120 °C an (Referenz: Nextel™ Ceramic Textiles Technical Notebook, 3M, 2004). Chemisch sind die Fasern durch eine hohe Zeitstandfestigkeit dahingehend zu charakterisieren, dass die Festigkeit insbesondere unter atmosphärischer Luft bei hohen Betriebstemperaturen gewährleistet ist.

Die Fasern haben im Rahmen der vorliegenden Erfindung vorteilhaft einen Durchmesser zwischen 10 und 12 µm. Sie sind vorteilhaft miteinander - üblicherweise mit Leinwand- oder Satinbindung - zu Textilbahnen verwoben, zu Schläuchen gestrickt oder als Faserbündel um eine Form gewickelt. Zur Herstellung des keramischen Verbundsystems werden die Faserbündel oder Fasergewebe beispielsweise mit einem Schlicker imprägniert, der die Komponenten der späteren keramischen Matrix enthält, vorteilhaft Al₂O₃, Zirkoniumdioxid oder Mullit, (Schmücker, M. (2007). Faserverstärkte oxidkeramische Werkstoffe. Materialwissenschaft und Werkstofftechnik, 38(9), 698-704). Durch Wärmebehandlung bei > 700 °C entsteht eine hochfeste Verbundstruktur aus den Keramikfasern und der keramischen Matrix mit einer Zugfestigkeit von vorteilhaft > 50 MPa, bevorzugt > 70 MPa, weiter bevorzugt > 100MPa, insbesondere > 120MPa.

Bevorzugt wird als Faserverbundkeramik SiC/SiC, C/SiC, ZrO₂/ZrO₂, ZrO₂/Al₂O₃, Al₂O₃/ZrO₂, Al₂O₃/Al₂O₃ und/oder Mullit/Mullit eingesetzt. Weiter bevorzugt sind die oxidischen Faserverbundkeramiken SiC/Al₂O₃, SiC/Mullit, C/Al₂O₃, C/Mullit, Al₂O₃/Al₂O₃, Al₂O₃/Mullit, Mullit/ Al₂O₃ und/oder Mullit/Mullit, wobei unter "oxidischer Faserverbundkeramik" eine Matrix aus oxidischen keramischen Partikeln verstanden wird, die keramische, oxidische und/oder nicht-oxidische Fasern, enthält. Besonders bevorzugt sind demnach Systeme, bei denen Faser und Matrix aus dem gleichem oder sich ähnlich verhaltendem Stoff bestehen. Dabei bezeichnet das Material vor dem Schrägstrich den Fasertyp und das Material nach dem Schrägstrich den Matrixtyp. Als Matrixsystem für die keramische Faserverbundstruktur können auch Siloxane, Si- Precursoren und unterschiedlichste Oxide, wie zum Beispiel auch Zirkoniumdioxid, eingesetzt werden. Bevorzugt enthält die Faserverbundkeramik mindestens 99 Gew-% Al₂O₃ und/oder Mullit.

In einer Ausführungsform der vorliegenden Erfindung weist die Matrix einen Füllgrad an Fasern (Volumenanteil der Fasern in der Verbundstruktur) von 20 bis 40 % auf, der gesamte Feststoffgehalt der Verbundstruktur beträgt zwischen 50 und 80 %. Faserverbundkeramiken auf Basis oxidischer keramischer Fasern sind chemisch beständig in oxidierender und in reduzierender Gasatmosphäre (d. h. keine Gewichtsänderung nach Lagerung in Luft bei 1200 °C über 15 h (Referenz: Nextel™ Ceramic Textiles Technical Notebook, 3M, 2004)) und thermisch beständig bis über 1300 °C. Faserverbundkeramiken besitzen ein quasi-duktiles Verformungsverhalten. Damit sind sie temperaturwechselbeständig und besitzen ein quasi-zähes Bruchverhalten. So kündigt sich das Versagen eines Bauteils an, bevor es bricht.

Die Faserverbundkeramik weist vorteilhaft eine Porosität von 20 % bis 50 % auf; sie ist demnach nicht gasdicht gemäß Definition in DIN 623-2.

Besonders bevorzugt ist das System Aluminiumoxidfaser-Aluminiumoxidmatrix, insbesondere im Einsatz beim Kalzinierprozess von NCM-Elektroden-Material, siehe Beispiele.

Der Fachmann kann das jeweils bevorzugte System Faser-Matrix anhand der in dem betreffenden erfindungsgemäßen Rohr durchzuführenden Reaktionen optimieren unter Berücksichtigung der jeweils zulässigen Verunreinigungen im Endprodukt.

Als Metall wird vorteilhaft eine Legierung, z.B. Stähle der Güte 1.47xx oder 1.48xx, oder Nickelbasislegierungen der Güte 2.48xx, verwendet, bevorzugt 1.48xxx.

Vorteilhaft besteht die Gesamt-Wand des erfindungsgemäßen Rohres aus zwei oder mehr Wänden. Weitere Wände können auf der Innenseite, der Außenseite und/oder zwischen den genannten Wänden liegen; beispielsweise Schutzschichten gegen Abrieb, Dämpfungsschichten zur Kompensation unterschiedlicher Wärmeausdehnung der Werkstoffe, elektrische Isolationsschichten, Dichtungsschichten, Heizschichten (elektr. Heizung), oder auch Hohlschichten, die mit inerten Gasen gespült werden können, z.B. mit Stickstoff oder Argon, oder die mit Dampf zur Beheizung des Innenraums durchströmt werden können.

Bei einem erfindungsgemäßen Rohr mit mehr als zwei Wänden kann z.B. die Zwischenwand zwischen äußerem Metallrohr und innerem Faserverbundkeramikrohr aus expandiertem Graphit oder Graphitfolie bestehen, z.B. Sigraflex® (SGL Carbon), um unterschiedliche Wärmeausdehnungen der Werkstoffe abzufedern.

Ferner kann beispielsweise bei einem erfindungsgemäßen Rohr mit mehr als zwei Wänden ein Rohr als Widerstandheizung eingesetzt werden. Dieses kann z.B. zwischen metallischem Au-ßenrohr und Faserverbundkeramikinnenrohr liegen.

Bei einem erfindungsgemäßen Rohr mit vier Wänden ist z.B. eine Kombination aus den beiden vorausgehenden Beispielen möglich, wobei die Positionen der Graphitschicht und der Widerstandsheizung variabel sind.

Ferner ist ein erfindungsgemäßes Rohr mit drei oder mehr Wänden vorteilhaft, bei dem eine der inneren beiden oder eine der inneren drei oder eine der inneren vier Wänden ein Widerstandsheizungsrohr ist und die äußerste Wand eine thermische oder elektrische Isolationsschicht oder eine sowohl thermische als auch elektrische Isolationsschicht ist, wobei die thermische Isolationsschicht aus mehreren einzelnen Schichten bestehen kann, die hier aufgrund ihrer Funktion als eine Wand betrachtet werden können.

Bei der Kombination der Faserverbundkeramik mit einem metallischen Werkstoff liegt die Wandstärke der Faserverbundkeramik vorteilhaft zwischen 1 mm und 10 mm, bevorzugt zwischen 1,5 und 6 mm, insbesondere zwischen 2 mm und 6 mm; die Wandstärke des metallischen Werkstoffes liegt vorteilhaft zwischen 2 und 30 mm, bevorzugt 2,5 und 25 mm, insbesondere zwischen 3 und 15 mm bei einem einen Rohr-Innendurchmesser im Bereich von 100 bis 500 mm.

Die Wärmeleitfähigkeit der Faserverbundkeramik liegt vorteilhaft bei 0,4 W/m·K bis 8 W/m·K bei 200 °C bzw. 0,3 bis 5 W/m·K bei 1000 °C.

Die Wärmeleitfähigkeit der Metalllegierung liegt vorteilhaft bei 10 bis 25 W/m·K bei 200 °C bzw. 15 bis 35 W/m·K bei 1000 °C.

Bei einem Rohr-Innendurchmesser von 500 bis 1200 mm und der Kombination der Faserverbundkeramik mit einem metallischen Werkstoff liegt die Wandstärke der Faserverbundkeramik vorteilhaft zwischen 2 mm und 15 mm, bevorzugt zwischen 2,5 und 10 mm, insbesondere zwischen 4 mm und 8 mm; die Wandstärke des metallischen Werkstoffes liegt vorteilhaft zwischen 3 mm und 40 mm, bevorzugt 5 mm und 30 mm, insbesondere zwischen 6 mm und 25 mm.

Bei erfindungsgemäßen Rohren mit größerem Innendurchmesser kann eine größere Wandstärke sinnvoll sein.

Die Länge und der Durchmesser eines Drehrohrs werden nach gefordertem Stoffdurchsatz und benötigter Verweilzeit des Stoffs im Rohr zur Erzielung der gewünschten Produkteigenschaften ausgelegt.

Indirekt beheizte Drehrohröfen haben üblicherweise ein Verhältnis von Länge zu Durchmesser im Bereich von 5 bis 20, bevorzugt 6 bis 12. Es gibt aber auch Drehrohröfen, die stark davon abweichen, insbesondere absatzweise betriebene Drehrohröfen. Die Rohrlänge von indirekt beheizten Drehrohröfen beträgt in der Regel zwischen 1 und 20 m, wobei zwischen 0,5 m und 20 m davon beheizt sind. Es gibt Drehrohre, bei denen nur ein kleiner Teil der Gesamtlänge beheizt ist (< 50 %), der Rest der Länge dient als Trocknungs- oder Vorwärmzone bzw. als Kühlungszone, wobei eine aktive Kühlung, z.B. durch Kühlwasseraufgabe auf die Rohraußenwand, möglich ist. Die Innendurchmesser dieser indirekt beheizten Drehrohröfen betragen üblicherweise zwischen 50 und 1500 mm, wobei im Produktionsmaßstab üblicherweise Rohre mit einem Innendurchmesser > 100 mm, meist > 250 mm eingesetzt werden.

Die Abdichtung des erfindungsgemäßen Rohres, z.B. bei der Anwendung im Drehrohrofen, erfolgt vorteilhaft über das Außenrohr. Das Innenrohr beinhaltend eine Faserverbundkeramik wird vorteilhaft so in das metallische Außenrohr eingefügt, dass vorteilhaft kein Feststoff, d.h. vorteilhaft weniger als 0,1 % des Feststoffs bezogen auf den Ausgangsmassenstrom, zwischen die Rohre gelangen kann, bzw. dass vorteilhaft kein Feststoff aus dem Zwischenraum wieder hinausgelangen kann.

Die zumindest zwei Wände des erfindungsgemäßen Rohres können z.B. durch keramische Kleber oder Metall-Keramik-Löt- oder Schweißstellen verbunden werden. Auch die Verwendung metallischer Hülsen, die aufgeschrumpft werden, ist möglich. Dabei ist auf die unterschiedlichen thermischen Ausdehnungskoeffizienten der Werkstoffe Rücksicht zu nehmen. Der thermische Ausdehnungskoeffizient von Metalllegierungen ist in der Regel etwa doppelt so groß wie der des Faserkeramikverbundwerkstoffs, welcher im Bereich 4,3 - 8,4 * 10⁻⁶ / K liegt (Whipox®).

Das bedeutet, dass bei der Herstellung von erfindungsgemäßen Rohren vorteilhaft das Innenrohr z.B. in das vorgewärmte Außenrohr eingeführt wird, so dass vorteilhaft im kalten Zustand ein passgenaues Flächenpaar vorliegt. Im heißen Zustand wäre dann vorteilhaft Spiel zwischen Innen- und Außenrohr vorhanden.

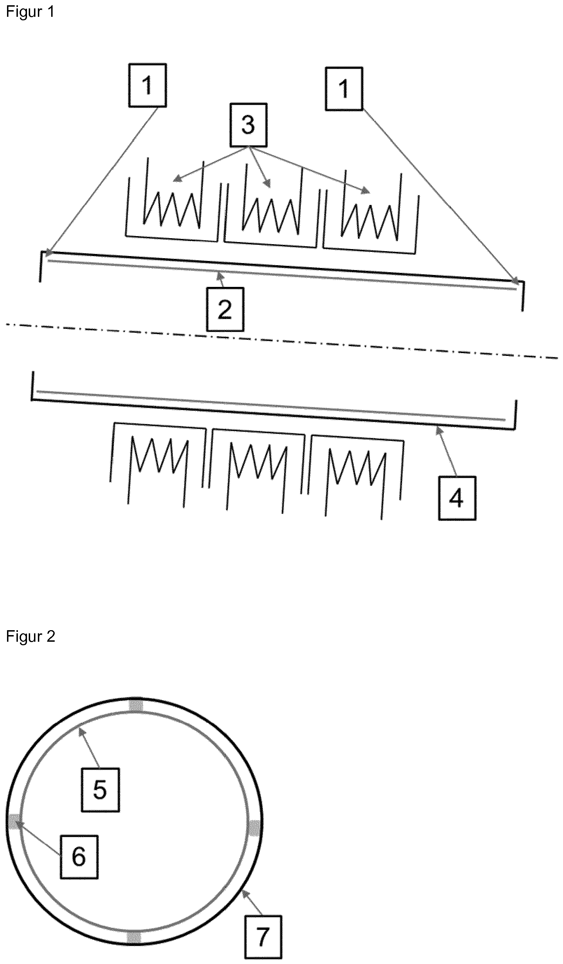

Alternativ kann zwischen Innen- und Außenrohr auch im kalten Zustand ein geringfügiger Abstand von beispielsweise 1 bis 20 mm, bevorzugt 2 bis 10 mm, insbesondere 2 bis 6 mm (Differenz Innendurchmesser Außenrohr-Außendurchmesser Innenrohr) vorgesehen werden (Fig. 1). Der Abstand kann durch Federn, z.B. aus Keramikfasermatten/-geweben, Graphit, oder auch Faserkeramikverbundwerkstoff gehalten werden. An den Stirnseiten ist vorteilhaft der Spalt (Fig. 1) zwischen Innenrohr und Außenrohrstirnfläche durch ein geeignetes Material abgedichtet (Los-Los-Lagerung). Das Innenrohr kann an einer Stirnseite auch fest mit dem Außenrohr verbunden werden, so dass nur an einer Seite ein Spalt vorliegt (Fest-Los-Lagerung). Die Rohre sind nicht zwangsweise koaxial ausgerichtet, dies ist aus mechanischen Gründen (Belastung der Lagerung) aber vorteilhaft.

Die Versiegelung beider Enden oder eines Endes des Verbundrohres kann auf vielfache Art und Weise durchgeführt werden.

Beispielsweise kann durch imprägnierung oder Beschichtung der äußeren Wand oder der inneren Wand mit einem Polymer, einer vorteilhaft unporösen Keramik, Pyrokohlenstoff und/oder einem Metall eine Versiegelung erreicht werden. Die versiegelten Bereiche dienen als Dichtflächen. Diese Variante kann bis zu einem Temperaturbereich von < 400 °C eingesetzt werden. Vorteilhaft wird das Rohr lediglich im Randbereich zu dem metallischen Verbindungsstück beschichtet. "Randbereich" bedeutet der letzte Abschnitt vor dem Übergang zu einem anderen Werkstoff, bevorzugt mit einer Länge entsprechend dem 0,05- bis 10-fachem Innendurchmesser des Rohres, bevorzugt entsprechend dem 0,1- bis 5-fachem Innendurchmesser, insbesondere entsprechend dem 0,2- bis 2-fachem Innendurchmesser. Die Dicke der Imprägnierung entspricht vorteilhaft der kompletten Wanddicke des Rohres im Randbereich. Verfahren zur Imprägnierung sind dem Fachmann bekannt.

Dieses Mehrfachmantelrohr, bevorzugt Doppelmantelrohr, wird beispielsweise als Drehrohr im Drehrohrofen verwendet. Ein Drehrohrofen ist ein Ofen, in dem das zu behandelnde Schüttgut selbst bewegt wird.

Alternativ kann das erfindungsgemäße Rohr in einem vertikalen Kalzinierofen eingesetzt werden, bei dem das Rohr statisch gelagert und von außen beheizt wird und das Kalzinationsgut von oben nach unten durch das Rohr wandert. Der vertikale Kalzinierofen kann sowohl als Rieselreaktor als auch als "wanderndes Festbett" ausgeführt werden.

Das Mehrfachmantelrohr kann darüber hinaus auch für Trommel- oder Drehrohrtrockner oder als Kühlrohr eingesetzt werden.

Die vorliegende Erfindung beinhaltet ferner einen Drehrohrofen beinhaltend ein erfindungsgemäßes Drehrohr.

Bevorzugt betrifft die vorliegende Erfindung einen Drehrohrofen beinhaltend ein Drehrohr, das mindestens doppelwandig aufgebaut ist, wobei das Material der mindestens einen Wand eine Faserverbundkeramik beinhaltet und das Material der mindestens anderen Wand Keramik oder Metall beinhaltet.

Im Drehrohrofen werden typischerweise thermische Behandlungen (Kalzinierung) von Material durchgeführt. Insbesondere ist das erfindungsgemäße Drehrohr für thermische Behandlungen bei hohen Temperaturen geeignet, insbesondere bei Temperaturen des Kalzinationsguts zwischen 300 und1800 °C, bevorzugt 400 bis 1600°C, insbesondere zwischen 500 und 1300°C.

Vorteilhaft ist die Kombination von Faserverbundkeramik, insbesondere als Innenwand, und des metallischen Werkstoffes, insbesondere als Außenwand, bei Temperaturen im Bereich zwischen 300 und 1300 °C, bevorzugt 500 bis 1200°C, insbesondere zwischen 600 und 1100°C.

Bevorzugt wird erfindungsgemäßes Drehrohr indirekt beheizt. Der Wärmeeintrag erfolgt vorteilhaft von außen sowohl durch das Metall- als auch durch das Faserverbundkeramikrohr an das sich im Rohr befindende Gut. Es können dabei alle dem Fachmann bekannten indirekten Beheizungsmethoden verwendet werden. Die Beheizung kann z.B. elektrisch, durch Erdgasbrenner oder durch Dampf erfolgen.

Der generelle Aufbau eines Drehrohres ist dem Fachmann beispielweise aus "Rotary Kilns" von A. A: Boateng, "Chemiemaschinen. Zentrifugen - Filter - Drehrohröfen" von Kantorowitsch oder Praxishandbuch Thermoprozesstechnik, Band II: Anlagen, Komponenten, Sicherheit. 2. Auflage, 2011, S. 571-579 bekannt.

Drehrohröfen sind typischerweise kontinuierlich betrieben Öfen zur thermischen Behandlung von Feststoffen, die als Pulver oder Formkörper vorliegen können. Die Öfen werden meist mit einer geringen Neigung von wenigen Grad, beispielsweise 0 bis 5°, betrieben, um durch die Rotation um die Rohrachse, beispielsweise mit einer Fr-Zahl im Bereich von 10⁻⁵ bis 0,9, einen axialen Feststofftransport hervorzurufen. Es gibt jedoch auch Batch-Drehrohröfen und Drehrohröfen mit keiner oder negativer Neigung, sowie Drehrohröfen, bei denen der Feststofftransport hauptsächlich durch Einbauten (Wendel oder Förderschnecke) hervorgerufen wird.

Drehrohröfen werden meist gasdurchströmt betrieben, bei kontinuierlich betriebenen Öfen kann der Gasstrom im Gleich- oder Gegenstrom zum Feststoffstrom erfolgen. Die Strömungsgeschwindigkeit des Gases liegt typischerweise im Bereich von 0 bis 1 m/s. Die Atmosphäre kann reaktiv, inert, oxidierend oder reduzierend sein. Die Verweilzeit des Feststoffs im Drehrohrofen beträgt üblicherweise einige Minuten bis zu wenigen Stunden (10 bis 240 min), kann, insbesondere im Fall direkt beheizter Drehrohröfen, aber auch deutlich darüber hinausgehen.

Im erfindungsgemäßen Drehrohr können alle dem Fachmann bekannten Klopfer verwendet werden, siehe "Rotary Kilns" von A. A. Boateng. Üblicherweise sind Klopfer an Kopf (Feststoffeinlaufseite) und Fuß (Feststoffauslaufseite) des Drehrohrs außen am Rohr angebracht. Entlang des Rohrumfangs können mehrere Klopfer oder Hubeinrichtungen für einen ortsfesten, mechanischen Klopfer (Hammer) angebracht sein. Pneumatische Klopfer können neben Kopf- und Fußposition auch entlang des Rohrs angebracht werden. Dazu wird vorteilhaft der Heizmantel im Bereich des Stößels unterbrochen werden.

Der erfindungsgemäße Drehrohrofen ist insbesondere für die thermische Behandlung von Materialien, z.B. partikulären Feststoffen bzw. Schüttgütern in Form von Pulvern, Bruchstücken, Agglomeraten, Formkörpern wie z.B. Tabletten oder Extrudaten, geeignet.

Ferner ist der Drehrohrofen geeignet für Oxidation, Reduktion, Oberflächenbehandlung (z.B. thermisches Nitridieren), Phasenausbildung, (Re-)Kristallisierung, Trocknung, Zersetzung, Verbrennung, Pyrolyse, Vergasung, sowie Synthese aller Art.

Der erfindungsgemäße Drehrohrofen ist ferner für den Einsatz in Prozessen mit mehreren thermischen Behandlungsschritten geeignet. Es kann bei diesen Prozessen vorteilhaft ein oder mehrere thermische Behandlungen in dem erfindungsgemäßen Drehrohr durchgeführt werden, wobei die anderen thermischen Behandlungen in anderen Reaktoren, wie z.B. Tunnelöfen, durchgeführt werden. So kann zum Beispiel eine Kombination aus Dissoziationsreaktion und Rekristallisation- oder Anlassschritt wie folgt durchgeführt werden: Dissoziationsreaktion, wie die Zersetzung von Carbonat- oder Nitratsalzen zum entsprechenden Oxid und zu Kohlenstoffdioxid bzw. entsprechenden Stickoxiden im Drehrohrofen und Rekristallisations- oder Anlassschritt in einem nachgeschalteten Tunnelofen.

Der Drehrohrofen, in dem das Kalzinationsgut durchmischt wird, ist durch bessere Wärme- und Stoffübertragung im Kalzinationsgut gekennzeichnet. Dies wirkt sich günstig auf die durchzuführende Reaktion aus. Die notwendige Verweilzeit im Drehrohrofen ist geringer als in einem Tunnelofen, in dem das Kalzinationsgut nicht durchmischt wird.

Manche thermische Behandlungsschritte können jedoch aufgrund ihrer Anforderungen an Temperatur und/oder Verweilzeit sowie aufgrund von z.B. kohäsiven Eigenschaften des Kalzinationsguts bei hoher Temperatur nicht im Drehrohrofen durchgeführt werden. In einem solchen Fall ist ein Verfahren mit vorgeschalteter thermischer Behandlung im Drehrohrofen vorteilhaft, wenn mindestens ein Schritt der thermischen Behandlung in einem Drehrohrofen durchgeführt werden kann. Dies führt zu verkürzter Verweilzeit im Tunnelofen und somit zu höherer Produktionskapazität. Daneben können oftmals höhere Beladungen der Brennhilfsmittel (Tiegel) im Tunnelofen realisiert werden, wenn eine chemische Reaktion oder Trocknung bereits im vorgeschalteten Drehrohrofen durchgeführt werden konnte. Das kombinierte Verfahren mit Drehrohrofen und Tunnelofen erweist sich in diesem Fall besondersvorteilhaft.

Bevorzugt sind thermische Behandlungen von Materialien, die hohe Reinheitsanforderungen aufweisen, insbesondere Freiheit von Verunreinigungen über 50 ppm (volumetrisch, molar oder massebezogen) durch Stoffe, die bei der thermischen Behandlung in das Produkt gelangen können.

Ferner sind bevorzugt die thermischen Behandlungen von Materialien, die stark zu Anbackungen neigen, insbesondere solchen, die zu einer Belagbildung auf der Rohrinnenwand führen, so dass an mindestens einer Stelle entlang der Rohrachse mindestens 50 % des Rohrumfangs im Inneren bedeckt sind.

Der erfindungsgemäße Drehrohrofen kann beispielsweise bei der Kalzinierung von alkalischem Material, eingesetzt werden, zum Beispiel bei der Herstellung von lithiierten Schichtoxiden von Nickel, Kobalt und Mangan. Bei dieser Anwendung ist die Faserverbundkeramik vorteilhaft aus dem System Al₂O₃/Al₂O₃ hergestellt.

Es sind je nach zu behandelndem Gut andere Faserkeramikverbundwerkstoffe zu bevorzugen.

Das erfindungsgemäße Rohr kann zur Herstellung beliebiger lithiierter Übergangsmetalloxide verwendet werden. Der Begriff "lithiiertes Übergangsmetalloxid" beinhaltet Mischmetalloxide, die Lithium und zumindest ein Übergangsmetall enthalten, ist jedoch nicht hierauf beschränkt. Vorteilhafte lithiierte Übergangsmetalloxide sind solche von Nickel, Kobalt, Mangan, und Kombinationen von mindestens zwei der vorhergehenden. Das stöchiometrische Verhältnis zwischen Lithium und den Gesamt-Übergangsmetallen liegt vorzugsweise im Bereich von 1,13: 0,87 bis 1: 2. Lithiiertes Übergangsmetalloxid kann bis zu 5 Mol-% Al, bezogen auf den Gesamtübergangsmetallgehalt, enthalten.

Bevorzugte lithiierte Übergangsmetalloxide sind lithiierte Spinelle und lithiierte Übergangsmetalloxide mit Schichtstruktur.

Bevorzugte lithiierte Übergangsmetalloxide sind ausgewählt aus der Gruppe bestehend aus lithiierten Spinellen, lithiierten Ni-Co-Al-Oxiden und lithiierten Übergangsmetalloxiden mit Schichtstruktur.

Beispiele von lithiierten Übergangsmetalloxiden sind LiCoO₂, LiMnO₂, LiNiO₂ und Verbindungen der allgemeinen Formel Li₁₊ₓ(NiₐCo_{b}Mn_{c}M¹_{d})₁₋ₓO₂, wobei M¹ ausgewählt ist aus der Gruppe bestehend aus Ca, Al, Ti, Zr, Zn, Mo, V und Fe, und die weiteren Variablen vorteilhaft wie folgt definiert sind:
- x: in einem Bereich zwischen 0,015 und 0,13,
- a: in einem Bereich zwischen 0,3 und 0,7,
- b: in einem Bereich zwischen 0 und 0,35,
- c: in einem Bereich zwischen 0,2 und 0,5
- d: in einem Bereich zwischen 0 und 0,03,
wobei a + b + c + d = 1.

In einer speziellen Ausführungsform der vorliegenden Erfindung wählt man lithiierte Übergangsmetalloxide aus LiCoO₂-beschichteten lithiierten Nickel-Kobalt-Magnesium-Oxiden, dotiert oder nicht dotiert, ein Beispiel ist LiCoO₂-beschichtetes LiNi_{0.9}Co_{0.09}Mg_{0.01}O₂. Grundsätzlich kann jeder der thermischen Behandlungsschritte zur Herstellung von LiCoO₂-beschichteten lithiierten Nickel-Kobalt-Magnesium-Oxiden in einem erfindungsgemäßen Drehrohr durchgeführt werden.

Weitere Beispiele von lithiierten Übergangsmetalloxiden sind Verbindungen der folgenden allgemeinen Formel Li_{1+y}(M²)_{2-y}O₄₋ᵣ, wobei vorteilhaft r im Bereich von 0 bis 0,4 und y im Bereich zwischen 0 und 0,4 liegt; M² ausgewählt ist aus einem oder mehreren Metallen der Gruppen 3 bis 12 des Periodensystems, zum Beispiel Ti, V, Cr, Mn, Fe, Co, Ni, Zn, Mo, wobei Mn, Co und Ni sowie Kombinationen hiervon bevorzugt sind. Besonders bevorzugt sind Kombinationen aus Ni und Mn. Ganz besonders bevorzugt sind LiMn₂O₄ und LiNi₂₋ₜMnₜO₄ wobei t vorteilhaft im Bereich zwischen 0 und 1 liegt.

Besipiele von Li-Ni-Co-Al-Oxiden sind Verbindungen der folgenden allgemeinen Formel Li(NiₕCoᵢAlⱼ)O₂₊ᵣ. Typische Werte für h, i und j sind:
h in einem Bereich zwischen 0,8 und 0,85,
i in einem Bereich zwischen 0,15 und 0,20,
j in einem Bereich zwischen 0,01 und 0,05.
r in einem Bereich zwischen 0 und 0,4.

Das Verfahren zur Herstellung der vorstehend genannten lithiierten Übergangsmetalloxide beinhaltet drei Schritte, im Folgenden als Schritt (a), Schritt (b) und Schritt (c) benannt:
(a) Mischen mindestens eines Lithiumsalzes und eines Precursors, ausgewählt aus der Gruppe bestehend aus Übergangsmetalloxiden, Übergangsmetalloxyhydroxiden, Übergangsmetallhydroxiden und Übergangsmetallcarbonaten, wobei Übergangsmetallhydroxide und Übergangsmetalloxyhydroxide bevorzugt sind,
(b) Vorkalzinieren der in Schritt (a) erhaltenden Mischung bei einer Temperatur im Bereich von 300 bis 700 °C und
(c) Kalzinieren der vorkalzinierten Mischung gemäß Schritt (b) bei einer Temperatur im Bereich von 550 °C bis 950 °C.

Einer der Schritte (b) und (c) oder beide können in dem erfindungsgemäßen Rohr durchgeführt werden. Auch können die beiden Schritte (b) und (c) gemeinsam in nur einem einzigen Rohr gemäß der vorliegenden Erfindung durchgeführt werden.

Bei der hier beschriebenen Anwendung ist die chemische Beständigkeit der erfindungsgemäßen Rohre, insbesondere gegenüber korrosiven Medien bei hohen Temperaturen, von großer Bedeutung. Gegenüber dem Einsatz von einwandigen monolithischen Keramiken bietet Faserverbundkeramik zwei entscheidende Vorteile: Zum einen die bessere Verfügbarkeit von Bauteilen in den geforderten Dimensionen, insbesondere große Durchmesser und Längen; zum anderen ist Faserverbundkeramik mechanisch quasiduktil, was den Einsatz von Klopfern erlaubt. Faserkeramikrohre können hinreichend dünnwandig hergestellt werden, so dass indirekter Wärmeeintrag durch die Rohrwand trotz Doppelmantelstruktur möglich ist.

Die Vorteile oxidischer Faserverbundkeramiken sind zusammengefasst: die hohe Temperaturbeständigkeit, die hohe elastische Streckgrenze keramischer Fasern (ca. 1 %) und quasi-duktiles Verformungs- und Bruchverhalten. Zudem können aufgrund der Unempfindlichkeit von Faserkeramikverbundwerkstoffen gegenüber thermischen Gradienten und thermischen Schocks Rohre mit größerem Durchmesser und größerer Länge gefertigt und verwendet werden, als dies mit reinen keramischen Werkstoffen möglich ist.

### Beschreibung der Figuren:

Figur 1 ist eine schematische Darstellung eines indirekt beheizten Drehrohrofens mit drei Heizzonen [3] im Querschnitt in Seitenansicht. Die Rotationsachse ist als Strichpunktlinie dargestellt. Gekennzeichnet sind die abzudichtenden Rohrumfänge [1] an der Stirnseite des Innenrohrs [2], welches in dieser Darstellung etwas kürzer ist als das Außenrohr [4]. Das Außenrohr [4] weist in diesem Beispielschema Überlaufwehre an Ein- und Auslass auf, diese sind optional.
Figur 2 zeigt das Doppelmantelrohr in Stirnseitenansicht. Das Innenrohr [5] wird in dieser beispielhaften, schematischen, nicht maßstabsgetreuen Darstellung von vier im 90°-Winkel zueinanderstehenden Federn [6] im Außenrohr [7] in Position gehalten. Die Federn dienen der Kompensation unterschiedlicher Wärmeausdehnungen von Innen- und Außenrohr.

### Beispiele:

Gasvolumina sind in Normkubikmeter angegeben, das heißt bei 1 bar und 20°C gemäß ISO 6358 / ISO 8778.

### I. Herstellung einer Mischung

Es wurde eine trockene Mischung von Li₂CO₃ mit MO(OH)-Precursorpartikeln, M = Ni, Co und Mn im Molverhältnis 1:1:1, mittlerer Partikeldurchmesser 10 µm, hergestellt. Das Massenverhältnis von Li₂CO₃ zu MO(OH) betrug 1 : 2. Man erhielt eine Mischung.

### II. Kalzinierversuche

Vergleichsversuche: Kalzinierung von NCM-Kathodenmaterialien in einem Metallrohr. NCM-Kathodenmaterialien sind korrosiv und neigen bei der thermischen Behandlung im Drehrohr bei hohen Temperaturen ab ca. 700 °C zu starkem Ankleben an der Rohrwand. Dies macht den Einsatz von Hilfsmitteln wie z.B. Klopfern oder Abstreifern erforderlich. Ohne Einsatz derartiger Hilfsmittel wird die Rohrinnenwand vollständig mit angebackenem Material bedeckt.

### 11.1: Kontinuierliche Kalzination bei 675 °C

### 11.1.1: Verwendung eines Rohres aus Nickelbasislegierung

Mischung aus I. wurde einem Drehrohrofen der Firma "Linn High Therm" (Rohrlänge 2 m, davon 1 m in drei Zonen eingeteilt beheizt, Rohrinnendurchmesser 100 mm, keine Einbauten) mit Rohr aus Nickelbasislegierung der Güte 2.4851 über eine Förderschnecke zugeführt. Die Zufuhr an Mischung wurde auf 1,3 kg/h festgelegt. Der Ofen hatte 3 Heizzonen mit einer jeweiligen Länge von 330 mm, im Beispielfall der thermischen Behandlung im Drehrohrofen, waren diese auf 550 °C, 675 °C, und 675 °C eingestellt. Die Rohrneigung betrug 1°, die Rotationsgeschwindigkeit 2 Umdrehungen pro Minute. Es wurden keine Klopfer eingesetzt.

Die e Mischung durchlief bei der thermischen Behandlung einen unbeheizten Teil des Rohrs von ca. 400 mm Länge (das Ende der Förderschnecke ragte ca. 100 mm ins Rohr hinein), und wurde dort durch Konvektion (Gas im Gegenstrom, aus dem beheizten Bereich kommend, Konduktion (Wärmeleitung in Schüttgut und Metallrohr) und Strahlung vorgewärmt. Nach den Heizzonen folgte ein weiterer unbeheizter Teil von 500 mm Länge, bevor das Material ausgeschleust wurde. Der Drehrohrofen wurde im Gegenstrom betrieben, es wurden 2 mₙ³/h Luft auf der Feststoffaustragseite zugeführt.

Die chemischen Reaktionen, die zur Produktbildung führten, liefen in allen Zonen ab, auch in der nicht beheizten Einlaufzone und bereits in der Dosier-/Förderschnecke. Dies konnte durch die teilweise Zersetzung der Lithiumcarbonats zu Lithiumoxid (und CO₂) durch Entnahme einer Probe aus der Förderschnecke nachgewiesen werden.

### II.1.2: Verwendung eines Rohrs aus Stahl "SS 330"

Mischung nach I. wurde in einem Drehrohrofen des Herstellers "Harper International" thermisch behandelt. Dabei wurde ein einbautenloses Rohr aus der Stahllegierung "SS 330" verwendet, dessen Gesamtlänge 10 Fuß (US, entsprechend 3,05 m) und dessen Innendurchmesser 10 Zoll (25,4 cm) beträgt. Von der Gesamtlänge sind 8 Fuß in 4 Heizzonen von jeweils 2 Fuß Länge beheizt. Die Temperaturen der Heizzonen wurden auf 550 °C (erste Zone) bzw. 675 °C (Zonen 2-4) eingestellt.

Dem Ofen wurden pro Stunde 8,4 kg der Mischung aus I. zugeführt. Die Rohrneigung wurde auf 1,5° eingestellt, die Drehgeschwindigkeit auf 1,5 Umdrehungen pro Minute. Es wurden 10 mₙ³/h Luft im Gegenstrom zugeführt. Es wurden Klopfer eingesetzt.

Während des thermischen Behandlungsprozesses reicherte sich Chrom aus der Rohrlegierung in beiden Versuchen im Produkt an. In der Eduktmischung und in der Förderschnecke war noch keine Produktverunreinigung durch Chrom feststellbar. Die Versuche wurden dreimal wiederholt und die gemittelten Analysewerte der Chromkonzentration sind in Tabelle 1 aufgeführt.

**Tabelle 1: Chromanreicherung nach Kalzinierung bei 675 °C**

| Ort der Probenentnahme | Vergleichsbeispiel 1.1 | Vergleichsbeispiel 1.2 |
|---|---|---|
| Eduktmischung | < 10 ppm | < 10 ppm |
| Förderschnecke | < 10 ppm | < 10 ppm |
| Ofen auslauf | 20 ppm | 30 ppm |

| | | |
|---|---|---|
| Die Messgenauigkeit liegt für Cr bei ± 2 ppm. | | |

### II.2: Kontinuierliche Kalzination bei 900°C - Vergleichsbeispiel

Analog zu Versuch 11.1.1 wurde im selben Drehrohrofen mit einem Rohr aus 2.4851 (Nickelbasislegierung) eine Kalzinierung bei 900°C durchgeführt.
Man führte 1,2 kg/h Material zu, das gemäß des in Beispiel 11.1.1 beschriebenen Verfahrens hergestellt wurde. Die Heizzonen waren auf jeweils 925 °C eingestellt. Die Rohrneigung betrug 2°, die Rotationsgeschwindigkeit 2 Umdrehungen pro Minute.

Der Versuch musste aufgrund der starken Anbackungen abgebrochen werden. Das Material backte aufgrund seiner - bei hohen Temperaturen klebrigen - Eigenschaften an der Rohrwand an. Das händisch entnommene Produkt hatte Verunreinigung gemäß Tabelle 2.

**Tabelle 2: Chrom- und Eisenanreicherung (Massenbasis) nach Kalzinierung bei 925 °C**

| Ort der Probenentnahme | Chrom aus Nickelbasislegierung der Güte 2.4851 | Eisen aus Nickelbasislegierung der Güte 2.4851 |
|---|---|---|
| Händische Probenentnahme nach abgebrochenem Versuch | 0,15 % / 1500 ppm | 0,009 % / 90 ppm |

| | | |
|---|---|---|
| Die Messgenauigkeit liegt für Cr und Fe bei ± 2 ppm | | |

### III.: Diskontinuierliche Kalzination

### III.1: Materialtest / Kontaminationstest Aluminiumoxid:

In Materialtests wurde gezeigt, dass Aluminiumoxid sowohl in Form von dicht gesinterter oder poröser Keramik als auch als Faserverbundkeramik (Al₂O₃/Al₂O₃) beständig gegen das zu behandelnde Gut ist.

Es wurden Faserverbundkeramiken auf Basis von Endlosfasern "3M™ Nextel™ Ceramic Fiber 610" verwendet. Die Fasern weisen einen Anteil von >99 % Al₂O₃ auf. Die verwendeten Faserverbundkeramiken basierten darüber hinaus auf einem keramischen Schlicker mit einem Anteil von > 99 % Al₂O₃ am Feststoff. Die Faserverbundkeramiken unterschieden sich hinsichtlich weiterer Eigenschaften wie z.B. Dichte, Porosität, Oberflächenbeschaffenheit.

Dabei wurde im diskontinuierlich betriebenen Kammerofen gearbeitet. Es wurde eine Probe des Werkstoffs mit Mischung aus I. beaufschlagt, auf 900 °C erhitzt (bei 3 K/min) und nach 6 Stunden Haltezeit abgekühlt. Dadurch wird zusätzlich zur chemischen eine thermische Wechselbeanspruchung aufgeprägt. Nach der Abkühlung wurde erhaltenes Produkt durch frische Mischung nach I. ersetzt und der Zyklus wurde von neuem durchlaufen. Die Proben hielten über 30 Zyklen bzw. 90/100 Zyklen stand. 30 Zyklen sind eine typische Anzahl, nach der sich die Eignung eines Werkstoffs feststellen lässt.

Bei diesen Materialtests wurde keine Verunreinigung im Produkt nachgewiesen.

**Tabelle 3: Chemische Beständigkeit von Keramik und Faserverbundkeramik**

| | Aluminiumoxid, dicht gesintert | Aluminiumoxid, poröse Keramik | Faserverbundkeramik (Al₂O₃/Al₂O₃) |
|---|---|---|---|
| Zyklus | >100 | >30 | >90 |
| Verunreinigung an Cr, Fe und Cu | - | - | - |

### III.2: Materialtest / Kontaminationstest hochtemperaturbeständigen Stählen und Nickelbasislegierungen:

Analog zum Materialtest für Aluminium wurde vor jedem Zyklus frische Mischung nach I. auf Testbleche aufgegeben. Es handelte sich um Bleche der Maße 100 x 100 mm mit Dicken von 2 bis 3 mm.

Bei den Vergleichstests mit hochtemperaturbeständigen Stählen der Güte 1.4845 und Nickelbasislegierungen der Güte 2.4856 wurden bei den auf dieselbe Weise durchgeführten Tests mit Maximaltemperaturen von 900 °C bzw. 700 °C Verunreinigung an Cr und Fe gemäß Tabelle 4, nachgewiesen. Auch nach dem 5. Zyklus traten erneut Verunreinigungen auf; eine Stabilisierung konnte nicht festgestellt werden. Die Testreihe bei 900 °C wurde aufgrund der enorm hohen Verunreinigungen des Produkts nach dem 5. Zyklus abgebrochen.

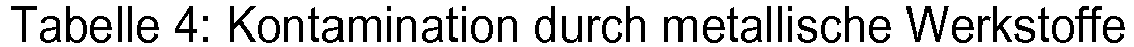

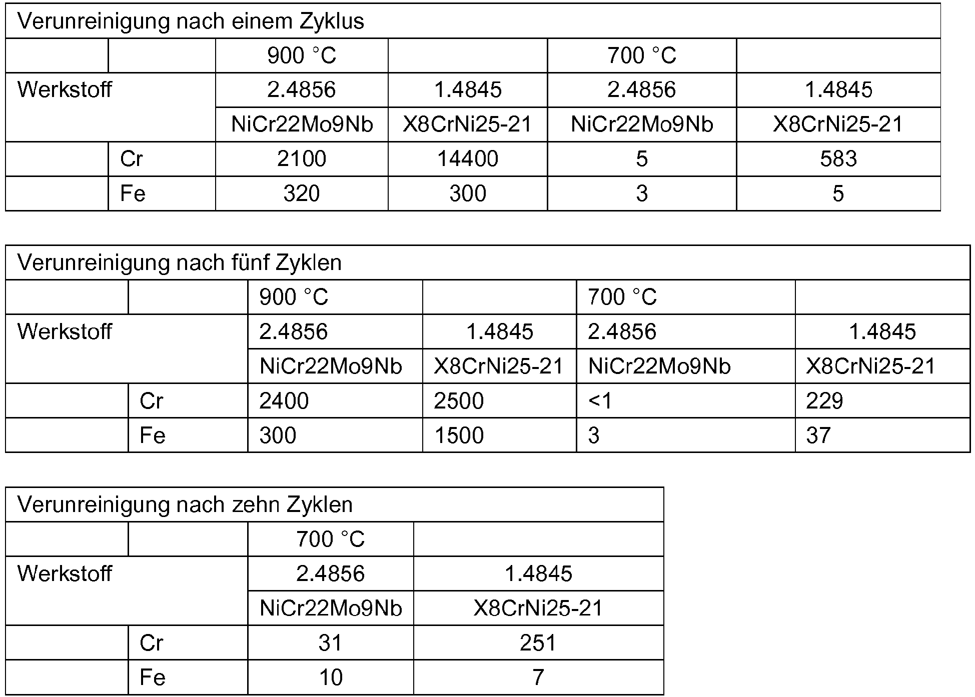

### Versuch III.3 Kalzination in einem erfindungsgemäßen Rohrreaktor

Fügt man einen Drehrohrreaktor mit einer inneren Wand aus Faserverbundkeramik, Al₂O₃/Al₂O₃, äußere Wand aus Stahl SS 330, so erhält man einen erfindungsgemäßen Drehrohrofen, Quotient aus Wärmeleitfähigkeit und Wanddicke (Wärmedurchgangskoeffizient) bei 800 °C > 50 W/(m²·K), aber unter 5000 W/(m²·K). Die Rohrneigung lässt sich auf 1,5° einstellen. Fügt man dem erfindungsgemäßen Drehrohren pro Stunde 8,4 kg der Mischung aus I. zu und kalziniert bei 675°C und einer Drehgeschwindigkeit von 1,5 Umdrehungen pro Minute sowie einer Luftzufuhr von 10 mₙ³/h Luft im Gegenstrom, so beobachtet man dass das resultierende Kathodenmaterial geringere Verunreinigungen an Fe und Cr aufweist als ein Kathodenmaterial, das nach 11.1.2 hergestellt wird. Das gefügte Rohr erlaubt den Einsatz von Klopfern zur Verhinderung von Anbackungen an der Rohrwand.

## Patentansprüche

1. Rohr, das doppelwandig aufgebaut ist, wobei das Material der innenliegenden Wand Faserverbundkeramik beinhaltet und das Material der außenliegenden Wand Metall beinhaltet, wobei die doppelwandige Rohrwand einen Quotient aus Wärmeleitfähigkeit und Wanddicke (Wärmedurchgangskoeffizient) bei 800 °C von > 50 W/(m²·K) aufweist.

2. Rohr nach Anspruch 1, **dadurch gekennzeichnet, dass** als Fasern und/oder der Matrix Oxide eines Elementes aus der Gruppe: Be, Mg, Ca, Sr, Ba, Seltene Erden, Ti, Zr, Hf, V, Nb, Ta, Cr, Mo, W, Mn, Fe, Co, Ni, Zn, B, Al, Ga, Si, Ge, Sn, Re, Ru, Os, Ir, In, sowie Mischungen von mindestens zwei dieser Oxide eingesetzt werden.

3. Rohr nach einem der Ansprüche 1 oder 2, **dadurch gekennzeichnet, dass** als Faserverbundkeramik SiC/SiC, C/SiC, ZrO₂/ZrO₂, ZrO₂/Al₂O₃, Al₂O₃/ZrO₂, Al₂O₃/Al₂O₃ und/oder Mullit/Mullit eingesetzt wird.

4. Rohr nach mindestens einem der Ansprüche 1 bis 3, **dadurch gekennzeichnet, dass** bei einem einen Rohr-Innendurchmesser im Bereich von 100 bis 500 mm die Wandstärke der Faserverbundkeramik zwischen 1 mm und 10 mm und die Wandstärke des metallischen Werkstoffes zwischen 2 mm und 30 mm liegt.

5. Rohr nach mindestens einem der Ansprüche 1 bis 4, **dadurch gekennzeichnet, dass** bei einem Innendurchmesser zwischen 200 mm und 500 mm die gesamte Wandstärke 2 mm bis 100 mm beträgt, wobei die Dicke der Wand aus Faserverbundkeramik weniger als 90 % der gesamten Wandstärke beträgt.

6. Rohr nach mindestens einem der Ansprüche 1 bis 5, **dadurch gekennzeichnet, dass** es weitere Wände auf der Außenseite enthält, gewählt aus Schutzschichten gegen Abrieb, Dämpfungsschichten, elektrische Isolationsschichten, Dichtungsschichten, Heizschichten und Hohlschichten.

7. Drehrohrofen beinhaltend ein Rohr nach einem der Ansprüche 1 bis 6.

8. Verwendung des Drehrohrofens nach Anspruch 7 für thermische Behandlungen, Oxidation, Reduktion, Oberflächenbehandlung, Phasenausbildung, (Re-)Kristallisierung, Trocknung, Zersetzung, Verbrennung, Pyrolyse, Vergasung und/oder Synthesen.

9. Verwendung des Drehrohrofens nach Anspruch 7 für Kalzinierungen von alkalischem Material.

## Claims

1. A tube which has a double-walled construction, wherein the material of the interior wall comprises ceramic matrix composite and the material of the exterior wall comprises metal, wherein the double-walled tube wall has a ratio of thermal conductivity and wall thickness (heat transfer coefficient) at 800°C of > 50 W/(m²·K).

2. The tube according to claim 1, where oxides of an element from the group: Be, Mg, Ca, Sr, Ba, rare earths, Ti, Zr, Hf, V, Nb, Ta, Cr, Mo, W, Mn, Fe, Co, Ni, Zn, B, Al, Ga, Si, Ge, Sn, Re, Ru, Os, Ir, In or mixtures of at least two of these oxides are used as fibers and/or the matrix.

3. The tube according to either claim 1 or 2, wherein SiC/SiC, C/SiC, ZrO₂/ZrO₂, ZrO₂/Al₂O₃, Al₂O₃/ZrO₂, Al₂O₃/Al₂O₃ and/or mullite/mullite is used as ceramic matrix composite.

4. The tube according to at least one of claims 1 to 3, wherein, at an internal tube diameter in the range from 100 to 500 mm, the wall thickness of the ceramic matrix composite is in the range from 1 mm to 10 mm and the wall thickness of the metallic material is in the range from 2 mm to 30 mm.

5. The tube according to at least one of claims 1 to 4, wherein, at an internal diameter in the range from 200 mm to 500 mm, the total wall thickness is from 2 mm to 100 mm, with the thickness of the wall composed of ceramic matrix composite being less than 90% of the total wall thickness.

6. The tube according to at least one of claims 1 to 5, wherein it comprises further walls on the outside selected from among protective layers against abrasion, damping layers, electrical insulation layers, sealing layers, heating layers and hollow layers.

7. A rotary tube furnace comprising a tube according to any of claims 1 to 6.

8. The use of the rotary tube furnace according to claim 7 for thermal treatments, oxidation, reduction, surface treatment, phase formation, (re)crystallization, drying, decomposition, incineration, pyrolysis, gasification and/or syntheses.

9. The use of the rotary tube furnace according to claim 7 for calcination of alkaline material.

## Revendications

1. Tube, qui est constitué d'une double paroi, le matériau de la paroi intérieure contenant de la céramique contenant des fibres et le matériau de la paroi extérieure contenant du métal, la paroi de tube à double paroi présentant un quotient de la conductivité thermique à l'épaisseur de paroi (coefficient de conduction thermique) à 800°C de > 50 W/ (m².K).

2. Tube selon la revendication 1, **caractérisé en ce qu'**en tant que fibres et/ou matrice, des oxydes d'un élément choisi dans le groupe : Be, Mg, Ca, Sr, Ba, terres rares, Ti, Zr, Hf, V, Nb, Ta, Cr, Mo, W, Mn, Fe, Co, Ni, Zn, B, Al, Ga, Si, Ge, Sn, Re, Ru, Os, Ir, In, ainsi que des mélanges d'au moins deux de ces oxydes, sont utilisés.

3. Tube selon l'une quelconque des revendications 1 ou 2, **caractérisé en ce qu'**en tant que céramique contenant des fibres, SiC/SiC, C/SiC, ZrO₂/ZrO₂, ZrO₂/Al₂O₃, Al₂O₃/ZrO₂, Al₂O₃/Al₂O₃ et/ou mullite/mullite est utilisé.

4. Tube selon au moins l'une des revendications 1 à 3, **caractérisé en ce que** pour un diamètre intérieur d'un tube dans la plage de 100 à 500 mm, l'épaisseur de paroi de la céramique contenant des fibres se situe entre 1 mm et 10 mm et l'épaisseur de paroi du matériau métallique se situe entre 2 mm et 30 mm.

5. Tube selon au moins l'une des revendications 1 à 4, **caractérisé en ce que** pour un diamètre intérieur entre 200 et 500 mm, l'épaisseur totale de paroi est de 2 mm à 100 mm, l'épaisseur de la paroi en céramique contenant des fibres représentant moins de 90% de l'épaisseur totale de paroi.

6. Tube selon au moins l'une des revendications 1 à 5, **caractérisé en ce que** qu'il contient d'autres parois sur le côté extérieur, choisies parmi des couches de protection contre l'abrasion, des couches d'amortissement, des couches d'isolation électrique, des couches d'étanchéité, des couches chauffantes et des couches creuses.

7. Four tubulaire rotatif contenant un tube selon l'une quelconque des revendications 1 à 6.

8. Utilisation du four tubulaire rotatif selon la revendication 7 pour des traitements thermiques, l'oxydation, la réduction, le traitement de surfaces, la formation de phases, la (re)cristallisation, le séchage, la décomposition, la combustion, la pyrolyse, la gazéification et/ou des synthèses.

9. Utilisation du four tubulaire rotatif selon la revendication 7 pour des calcinations de matériaux alcalins.
